(19) Europäisches Patentamt

European Patent Office

Office européen des brevets

(11) Publication number: **0 227 900 B1**

(12) # EUROPEAN PATENT SPECIFICATION

(45) Date of publication of patent specification: **31.03.93**  (51) Int. Cl.⁵: **G06F 9/355**, G06F 15/00

(21) Application number: **86114206.5**

(22) Date of filing: **14.10.86**

(54) **Three address instruction data processing apparatus.**

(30) Priority: **02.12.85 US 804206**

(43) Date of publication of application:
**08.07.87 Bulletin 87/28**

(45) Publication of the grant of the patent:
**31.03.93 Bulletin 93/13**

(84) Designated Contracting States:
**DE FR GB IT**

(56) References cited:
**EP-A- 0 149 213**
**EP-A- 0 184 828**

(73) Proprietor: **International Business Machines Corporation**
**Old Orchard Road**
**Armonk, N.Y. 10504(US)**

(72) Inventor: **Wolfgang, Jakob Paul**
**483 Los Pinos Way**
**San Jose California 95123(US)**
Inventor: **Auerbach, Daniel Jonathan**
**926 Michigan Avenue**
**San Jose California 95125(US)**
Inventor: **Chen, Tien Chi**
**6566 Tam O'Shanter Drive**
**San Jose California 95120(US)**

(74) Representative: **Blakemore, Frederick Norman**
**IBM United Kingdom Limited Intellectual**
**Property Department Hursley Park**
**Winchester Hampshire SO21 2JN (GB)**

EP 0 227 900 B1

**Description**

The present invention relates to three address instruction data processing apparatus. It is pointed out that, while such a processor can execute instructions other than three address instructions, it is the execution of the kind of three address instructions that are common in scientific processing with which the present invention is concerned.

"Super" computers that are designed to perform very fast scientific calculations, typified by machines such as the CDC7600 and Cray 1, use instructions called "three address codes". Three address code operations are characterised by three addresses in each instruction words, two addresses for operands and one address for a result. Typically, the two operands are supplied during a given machine cycle to a floating point arithmetic logic unit and a result from the arithmetic logic unit is stored back to the memory within the same cycle. In pipelined systems, the result stored within the cycle corresponds to an operation on operands supplied in an earlier instruction.

Machines handling three address codes in the prior art have limited address generating facilities. Typically, they operate in a scalar mode in which addresses are created or supplied by software independently during each instruction cycle or in a very fast vector mode in which the addresses generated are indexed by the machine by a counter incrementing the address by one in each cycle.

In the European Patent Application No. 0149213 there is disclosed a vector processor for sequentially reading out elements of a plurality of vector operands and sequentially storing the results of operations to the vector operands. Address registers are provided for every operand incorporating first, second and third registers for each operands. The operand address registers are updated in dependence upon comparison operations performed on each element of the vector.

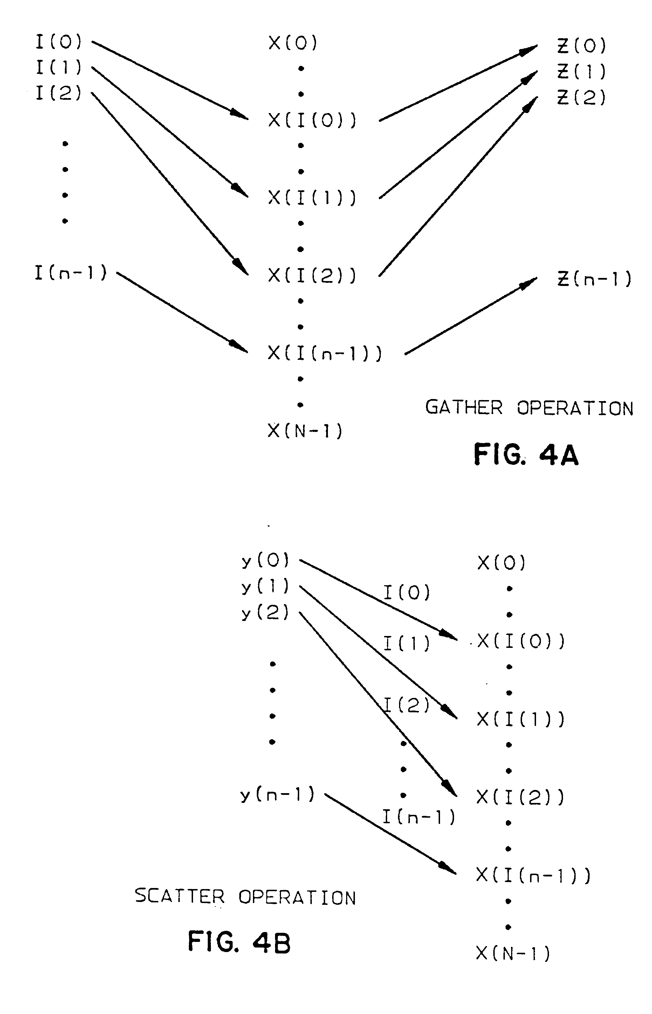

Such prior art addressing capabilities are inefficient for many operations that are desirable in scientific computers. For instance, the so-called "scatter and gather" vector operations (described below with reference to Figs. 4a and 4b) are very cumbersome in standard vector mode machines and in scalar mode machines. Further, other simple operations on vectors that involve non-trivial updating of addresses must be performed in prior machines in the slower scalar mode.

Accordingly, the present invention seeks to provide an architecture which overcomes the rigid sequencing common to prior art three address code "super" computers.

The present invention as claimed provides data processing apparatus responsive to a native set of instructions, including at least one three-address instruction, the apparatus being arranged to execute successively presented instructions in successive cycles and including a memory which has at least a first, a second and a third r-bit address register , each with an associated data register, and address generating means which has a first, a second and a third index register, each storing an alterable respective first, second or third index for supply as an address to the associated first, second or third address register, counter means, responsive to at least a portion of an instruction word in a cycle for independently incrementing, within the cycle, the first, second and third indices in the index registers, and index change means, responsive to at least a portion of an instruction word for independently changing, within a cycle, to an arbitrary value the index in at least one of the index registers.

There is described hereinafter, apparatus responsive to instruction words in successive cycles for generating addresses for a memory storing data objects addressable by r-bit addresses. The memory includes at least a first r-bit address port and an associated output register, a second r-bit address port and an associated output register, and a third r-bit address port and an associated input register. The apparatus comprises first, second and third index registers which store alterable first, second and third indices respectively for supply as addresses to the r-bit address ports. Further the apparatus comprises counter means responsive to at least a portion of an instruction word in a cycle for independently incrementing within the cycle the first, second and third indices. In this aspect the apparatus also comprises means for supplying directly from the instruction word partial base addresses for the first, second and third index registers. In addition, a means is provided that is responsive to at least a portion of an instruction word in a cycle for independently supplying an arbitrary index within the cycle to at least one of the first, second and third index registers to update at least one of the first, second and third indices.

By defining three independent index registers having corresponding counters advancing by one or zero under control of a portion of the instruction word, the indexing provided by typical scientific computers is provided. In addition, non-trivial updating is provided by means for generating an arbitrary index for supply to the index registers. By providing non-trivial updating of addresses in conjunction with vector mode indexing, the present invention significantly expands the power of a scientific processor, or any other processor performing vector calculations.

The present invention will be described further by way of example with reference to an embodiment thereof as illustrated in the accompanying drawings, in which:-

FIGURE 1, in sections 1A, 1B and 1C, is a diagram of one embodiment of the present invention;

FIGURE 2, in sections 2A and 2B, illustrates the flexibility provided by the base addressing provided by the embodiment of FIGURE 1;

FIGURE 3 is a diagram which illustrates one application of non-trivial updating of the vector addresses;

FIGURE 4, in sections 4A and 4B, illustrates the gather and scatter operations respectively which can be efficiently performed in and by the embodiment of FIGURE 1; and

FIGURE 5 is a block diagram of the three-port memory of FIGURE 1.

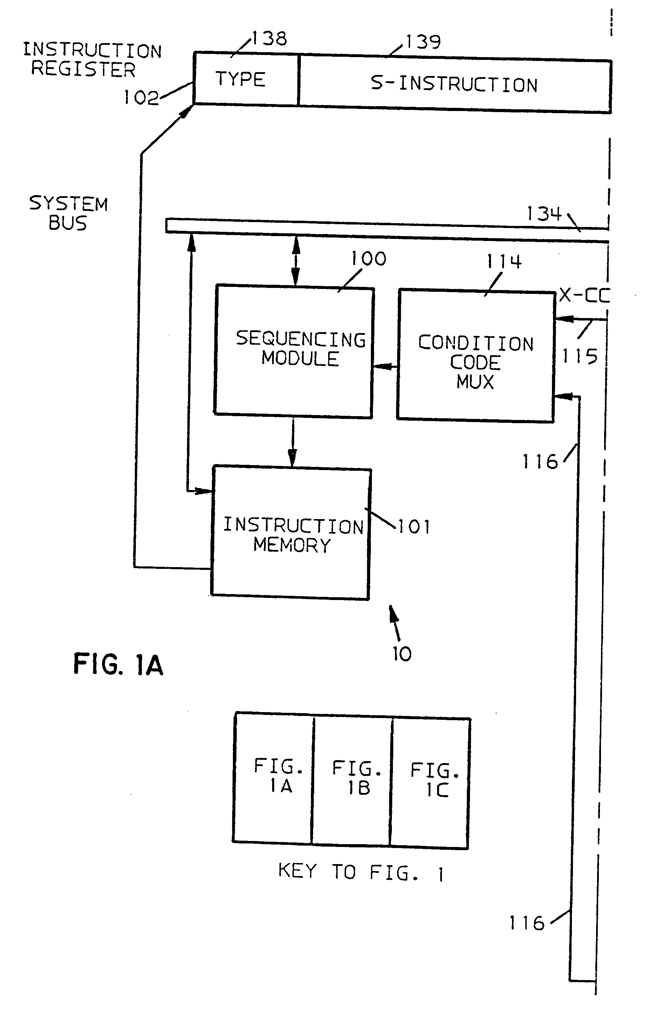

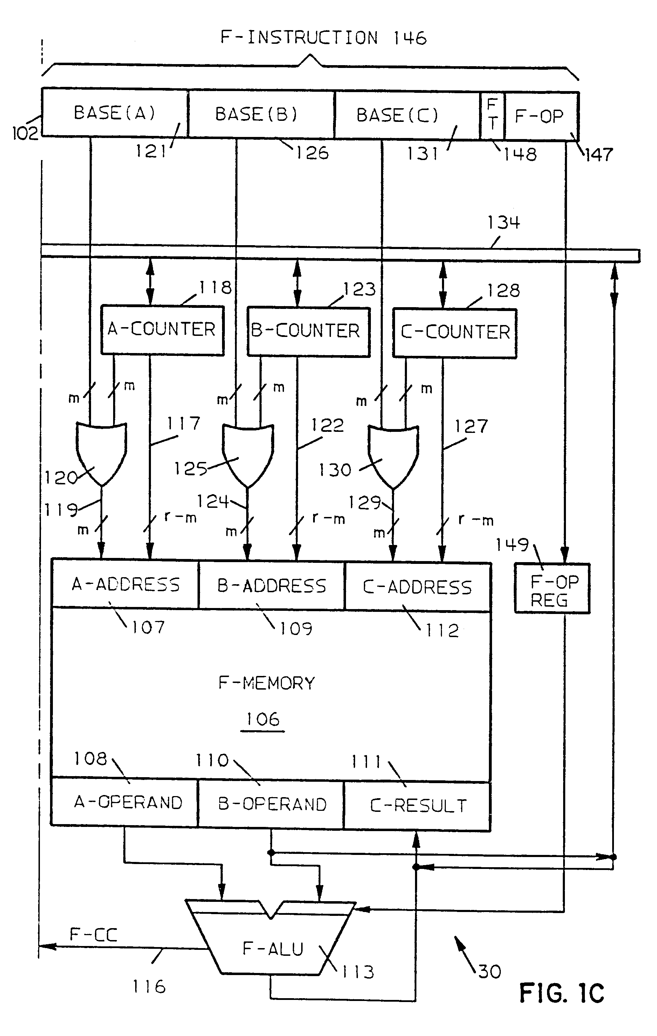

The architecture of the embodiment of the present invention that has been selected to illustrate the invention includes a sequencing means 10 (FIG. 1A) for supplying instruction words in successive cycles to an instruction register 102. The sequencing means 10 includes a sequencing module 100 for addressing an instruction memory 101. Data from instruction memory 101 are clocked into instruction register 102. The content of instruction register 102 is called an instruction word of the processor. The time in which the processor executes one instruction word is called one instruction cycle.

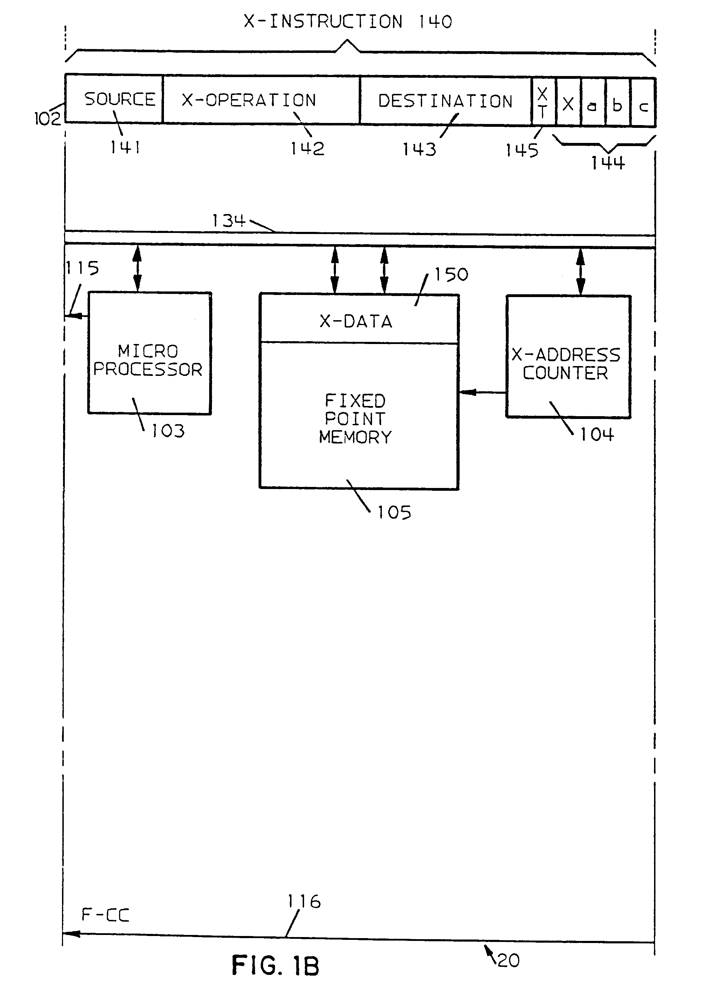

The architecture includes a fixed point means 20 (FIG. 1B) responsive to a portion of the instruction word in a cycle for independently supplying an arbitrary index within the cycle for use as described below. The fixed point means 20 includes a microprocessor 103 for computations on fixed point numbers. Also included are a fixed point address counter 104 which includes an index register and a fixed point memory 105. The fixed point address counter 104 supplies addresses to the fixed point memory 105.

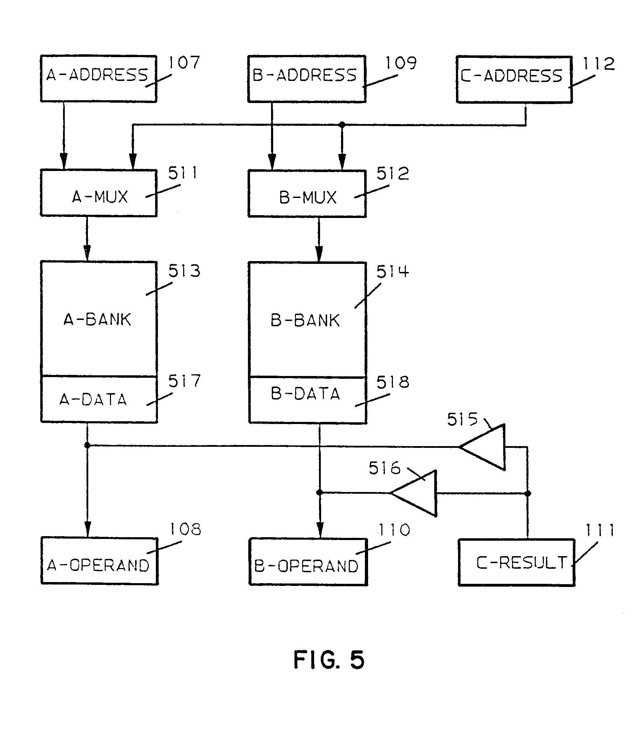

A floating point means 30 (FIG. 1C) according to the preferred embodiment includes a floating point memory (F-memory) 106 made up of a 3-port RAM such as is described below with reference to FIG. 5. During one instruction cycle, F-memory 106 fetches the data item which is stored at the address supplied at a first r-bit address port (A-address port) 107 to an associated output port (A-output port) 108, and it fetches the data item which is stored at the address supplied at a second r-bit address port (B-address port) 109 to an associated output port (B-output port) 110, and it stores the data item supplied to an input port (C-input port) 111 at the address supplied at a third r-bit address port (C-address port) 112.

The floating point means 30 also includes a floating point arithmetic logic unit (F-ALU) 113 that combines data from the A-output port 108 and the B-output port 110 of F-memory 106 to a result, which is supplied after a pipeline delay of say d instruction cycles to C-input port 111 of memory 106. The number d is called the pipe depth of arithmetic logic unit 113.

Condition code MUX 114 associated with the sequencing means 10 selects one of an X-condition code 115 supplied by microprocessor 103 and an F-condition code 116 supplied by floating point F-ALU 113 and forwards it to sequencing module 100.

The means for supplying addresses to the A-address port 107, B-address port 109 and C-address port 112 comprises an A-counter 118, a B-counter 123 and a C-counter which include first, second and third index registers, respectively. For the purpose of the description of the means for supplying addresses in the preferred embodiment, let r be a natural number, let $R = 2^{**}r$ ("$^{**}$" designating that "r" is an exponent) and let F-memory 106 have R internal addresses. Thus addresses in F-memory 106 can be specified with r-bit addresses. Let m be a natural number smaller than r which specifies the length of a partial base address for the r-bit addresses.

The r-m less significant digits 117 of the address supplied to A-address port 107 of F-memory 106 consist of the r-m less significant bits of the index register in A-counter 118.

The m most significant bits 119 of the address supplied to A-address port 107 of F-memory 106 come from the output of circuit 120, which computes the bitwise OR of the m most significant bits of A-counter 118 and an m-bit wide partial base address (base (A)) 121, which is supplied as an m-bit wide portion of the instruction word from the instruction register 102.

The r-m less significant digits 122 of the address supplied to B-address port 109 of F-memory 106 consist of the r-m less significant bits of the index register in B-counter 123. The m most significant bits 124 of the address supplied to B-address port 109 of F-memory 106 come from the output of circuit 125, which computes the bitwise OR of the m most significant bits of B-counter 123 and an m-bit wide partial base address (base(B)) 126, which is supplied as an m-bit wide portion of the instruction word from the instruction register 102.

The r-m less significant digits 127 of the address supplied to C-address port 112 of F-memory 106 consist of the r-m less significant bits of the index register in C-counter 128. The m most significant bits 129 of the address supplied to C-address port 112 of F-memory 106 come from the output of circuit 130, which computes the bitwise OR of the m most significant bits of C-counter 128 and an m-bit wide partial base address (base(C)) 131, which is supplied as an m-bit wide portion of the instruction word from the instruction register 102.

Instruction memory 101, sequencing module 100, microprocessor 103, fixed point memory 105, X-address counter 104, floating point memory 106, A-counter 118, B-counter 123, C-counter 128, a main memory and an external I/O-unit communicate via system bus 134. Main memory and external I/O-unit are mentioned for completeness and are not shown in FIG. 1.

For the execution of branch immediate, fixed point immediate and floating point immediate instructions, there are data paths from instruction register 102 to the system bus 134. These data paths are mentioned for completeness and are not shown in FIG. 1.

The instruction word, i.e. the content of instruction register 102 is divided into several fields. The type field 138 determines the instruction type, which in turn determines the meaning of the remaining bits of the instruction word. There are instruction types for branch immediate operations, fixed point immediate instructions, floating point immediate instructions and for moving data between memories 101, 105, 106, the main memory as well as the external I/O-unit. The relevant instruction type for this invention is the "compute" instruction type.

In the compute instruction type, the bits of the instruction word outside type field 138, are subdivided into 3 large fields. First, the S-instruction field 139 controls condition code MUX 114 and determines the operation of sequencing module 100.

Second, the X-instruction field 140 controls microprocessor 103, fixed point memory 105, X-address counter 104, A-counter 118, B-counter 123 and C-counter 128. It is divided into 5 subfields: the source field 141, the X-operation field 142, the destination field 143, the test bit XT 145 and the counter field 144. The counter field has four bits x, a, b and c. Under the control of the source field 141 the content of the X-data port 150 of X-memory 105, or the value of X-address counter 104, or the value of A-counter 118, or the value of B-counter 123 or the value of C-counter 128 is loaded via system bus 134 into microprocessor 103. Under the control of X-operation field 142, the data loaded into the microprocessor 103 is logically combined with data internally stored in microprocessor 103. If test bit XT 145 is 0, said combined result is put back on system bus 134 and under the control of destination field 143 the result is loaded into none or one or several ones of the following destinations; the data port of X-memory 105, X-address counter 104, A-counter 118, B-counter 123, C-counter 128. If test bit XT 145 is 1, destination field 143 is interpreted as a condition code mask, the test specified by the condition code mask is applied to said result, and X-condition code 115 is updated.

The index register in X-address counter 104 is incremented if bit x of counter field 144 is 1. The index register in A-counter 118 is incremented if bit a of counter field 144 is 1. The index register in B-counter 123 is incremented if bit b of counter field 144 is 1. The index register in C-counter 128 is incremented if bit c of counter field 144 is 1. If a counter is to be loaded under the control of destination field 143 and it is also to be incremented under the control of counter field 144, loading takes precedence over incrementing.

Data loaded into the X-data port 150 of X-memory 105 in an instruction cycle is automatically stored into the location to which the X-address counter 104 points at the end of the same instruction cycle.

If X-address counter 104 is changed in instruction cycle i, then the content of the memory location, to which the counter points at the end of instruction cycle i, is loaded into X-data port 150 at the end of instruction cycle i + 1. This process can proceed in a pipelined fashion.

F-instruction field 146 has 5 subfields: the fields base(A) 121, base(B) 126 and base(C) 131, which have been defined above, the F-operation field 147 and the FT test bit 148. During an instruction cycle, the values of the index registers in A-counter 118, B-counter 123 and C-counter 128 before they are updated under the control of the X-instruction 140 are combined with the partial base addresses in fields base(A) 121, base(B) 126 and base(C) 131 by means of circuits 120, 125 and 130 respectively as described above and the resulting addresses A, B and C are loaded into A-address port 107, B-address port 109 and C-address port 112 respectively. Also the content of F-operation field 147 is pipelined into F-operation register 149.

In the next instruction cycle, the operand specified by A-address port 107 is loaded into A-operand port 108 of F-memory 106, and the operand specified by B-address port 109 is loaded into B-operand port 110. From ports 108 and 110 the operands are loaded during the same instruction cycle into F-ALU 113. Also during the same instruction cycle the content of F-operation register 149 is loaded into F-ALU 113. Within the arithmetic unit F-ALU 113, the operation specified by the content of register 149 is applied to the operands. After d (pipeline depth) further instruction cycles the result will be available to be either stored or tested under control of the FT test bit 148.

If FT test bit 148 is 0, the data supplied by the F-ALU to the C-input port 111 of memory 106 is stored at address C. If FT test bit 148 is 1, the leading m bits of C-address 112 are interpreted as a condition code mask, the test specified by this mask is applied to the result delivered by F-ALU 113 in this instruction cycle, and the F-condition code 116 is updated. This process can proceed in a pipelined fashion.

If any one of condition codes X-CC 115 and F-CC 116 is updated in one instruction cycle, the selection of an instruction by the sequencing module 100 for fetching into instruction register 102 during the next instruction cycle may be influenced.

Applications

### 1. Vector Operations:

A typical operation performed with vector registers in a pipelined floating point processor is the combination of two vectors $X = (X(0),...,X(N-1))$ and $Y = (Y(O),...,Y(N-1))$ into a third vector $Z = (Z(0),...,Z(N-1))$ say by componentwise multiplication, i.e. $Z(i) := X(i)*Y(i)$ for $i = 0,...,N-1$. The operand vectors X and Y are loaded from vector registers of length at least N and the result Z is stored into a vector register of length at least N.

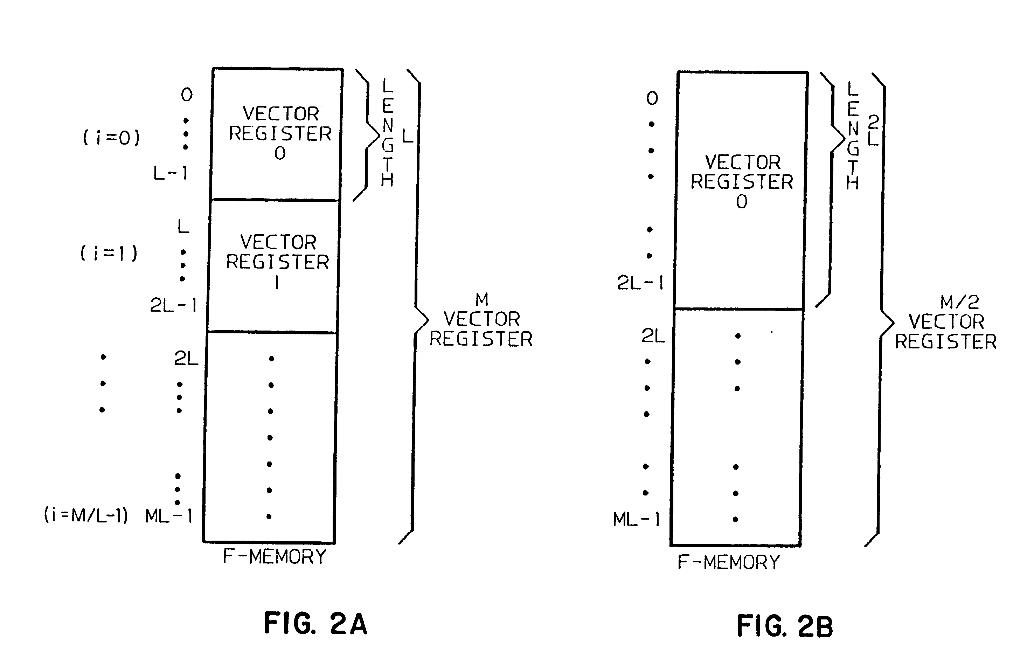

Let $M = 2^{**}m$ and let $L = 2^{**}(r-m)$. As illustrated in FIG. 2A, F-memory 106 can be used like M vector registers, each of length L: for $i = 0,...,M-1$ the function of the i'th vector register is performed by locations $iL, iL+1,...,(i+1)L-1$ of memory 106.

The L consecutive addresses of the i'th vector register can be generated at say the A-address port 107 of F-memory 106 during L consecutive instruction cycles in the following way: First under control of X-operation field 142 microprocessor 103 generates value O and puts it on system bus 134. Value 0 is then loaded into the index register in A-counter 118 under the control of destination field 143. In subsequent instructions under the control of bit a of counter field 144, A-counter 118 increments the index L-1 times, while field base (A) 121 has value i.

Because the index in the index register in A-counter stays below $L = 2^{**}(r-m)$, the index has m leading zeros, thus the m leading bits 119 of the A-address 107 equal exactly the value specified by field base (A) 121. Hence the A-addresses generated are indeed $(i*2^{**}(r-m) + 0),..., (i*2^{**}(r-m) + L-1)$.

Tables 1.1 and 1.2 illustrate for example a program and the contents of the various registers in the processor shown in FIG. 1 as the program is executed, respectively, for performing a componentwise product of vectors X and Y. Let p, q and s be numbers of vector registers. Suppose vectors X and Y have length $N = 6$ and are stored in the first 6 locations of vector registers p and q. Also assume that value 0 is stored in internal register R(0) of microprocessor 103. Table 1.1 contains a program which will perform the componentwise product of vectors X and Y and store the resulting vector Z into the first 6 locations of vector register s.

Let $P = p*L$, $Q = q*L$ and $S = s*L$. Table 1.2 shows the values of the index registers in the A-, B- and C- counters 118, 123, 128, A-, B- and C- addresses 107, 112, 127, operands 108, 110, F-operation register 149 and result 111 after the executions of instructions 1 through 9. A pipe depth $d = 2$ of F-ALU 113 is assumed.

As illustrated in FIG. 2B, F-memory 106 can also be partitioned into a smaller number of longer vector registers, for example into M/2 registers each of length 2L. In this case the i'th vector register occupies locations $i*2L,...,(i+1)*2L - 1$.

The 2L consecutive addresses of the i'th vector register can be generated at say the A-address port 107 of F-memory 106 during 2L consecutive instruction cycles in the following way: First under control of X-instruction field 140 value 0 is loaded into the index register in A-counter 118. In subsequent instructions under the control of bit a of counter field 144, A-counter 118 increments its index register 2L-1 times, while field base(A) 121 has value 2i. Because 2i is even, the least significant bit of base(A) is 0. Because the index in the index register stays below $L = 2^{**}(r-m+1)$, the index has m-1 leading zeros, thus the m-1 leading bits of the A-address 107 equal exactly the m-1 leading bits of base(A), i.e. they represent value i, and the m+1 trailing bits represent the index. Hence the A-addresses generated are indeed $(i*2^{**}(r-m+1) + 0),..., (i*2^{**}(r-m+1) + 2L-1)$.

Table 1.2 also illustrates, that while a vector operation is in progress (instructions 1, 2,...) microprocessor 103, X-address counter 104 and fixed point memory 105 are idle and could perform a computation of their own concurrently to the vector operation.

### 2. Addresses with fixed stride:

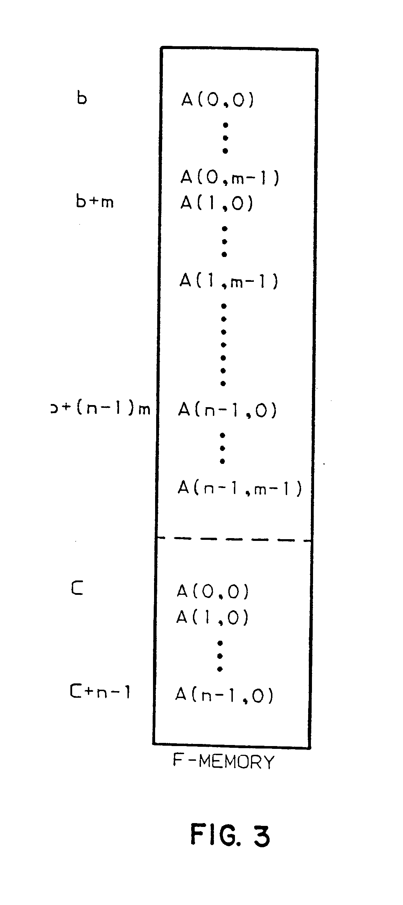

Often in a computation it is necessary to generate say n addresses $a, a+m, a+2m,..., a+(n-1)m$ which differ by a fixed stride m. In FIG. 3, for example, A is an n by m matrix with rows $(A(0,0),...,A(0,m-1));...;(A(n-1,0),...,A(n-1,m-1))$, and A is stored row by row in registers $b, b+1,..., b+n*m-1$ of F-memory 106. Suppose the transpose of A is to be stored row by row, starting at location c. Then in order to generate say the first row of the transpose of A one has to fetch data from locations a, a + m,..., a + (n-1)m and store them in locations c, c + 1,...,c + n-1.

In the previous section it has been described how to initialise the A-, B- and C- counters 118, 123, 128 to a certain value, how to generate successive addresses c, c + 1,...,c + n-1 by making use of the bits of counter field 144, and how to modify the value of a counter 118, 123, 128 with a base address provided by fields 121, 126, 131 from the instruction word. In order to generate for example A-addresses 117 with a fixed stride a, a + m, a + 2m one first stores the stride value m internally in microprocessor 103, and one initialises A-counter 118 to value a. In each of the following instructions A-counter 118 has to be increased by m. This is achieved by specifying the A-counter 118 in source field 141 (this loads the current value of the index in the A-counter into the microprocessor), adding m to the current index of the A-counter (the microprocessor 103 does this under the control of X-operation field 141) and specifying A-counter 118 in destination field 143 (this loads the old index + m into the index register in the A-counter).

Table 2.1 shows a program which, as described above with reference to FIG. 3, stores the first column of matrix A in consecutive locations starting at location c. Table 2.2 shows the progress of the computation through the various registers. It is assumed that value m is stored say in internal register R(0) of microprocessor 103 and that the index in A-counter 118 is initialised to value a and that the index in C-counter 128 is initialised to value c. Moreover it is assumed, that B-counter 123 is initialised to a value b, and that location b of F-memory 106 stores value 0. Thus adding a B-operand 110 fetched from location b to an A-operand 108 will give a C-result 111 identical to the original A-operand 108.

The base fields 121, 126 and 131 are not shown in this example. They are assumed to be 0 although they could be used. The progress of the computation over time during the pipe fill and the first 2 instruction cycles while the pipe is full is illustrated in table 2.2.

3. Gather and Scatter:

FIGS. 4A and 4B illustrate the gather and scatter operations, respectively. Let I = (I(0),...,I(n-1)) be an index vector. Let X = (X(0),...,X(N-1)) be a vector longer than vector I. The computation of vector Z = (X(I-(0)),...X(I(n-1)) from vectors I and X is called a gather operation.

Let I and X be as above. Let Y = (Y(0),...,Y(n-1)) be a vector as long as vector I. Replacing for all i = 0,...,n-1 element X(i) of vector X by element Y(I(i)) of vector Y is called a scatter operation.

Suppose index vector I is stored in fixed point memory 105 starting at location i, vector X is stored in F-memory 106 starting at location x and vector Z is to be computed from vectors I and X by means of a gather operation, and vector Z is to be stored in F-memory 106 starting at location z.

In this application, the set of addresses x + I(0), x + I(1),..., x + I(n-1) has to be generated and loaded into A-counter 118. One first stores value x internally in microprocessor 103, and one initialised X-address counter 104 to value i. In subsequent instructions one increases X-address counter 104 under the control of bit x of counter field 144. Thus X-address counter 104 will assume values i, i + 1, i + 2,... and consequently data I(i), I(i + 1), I(i + 2),...will appear at X-data port 150 of fixed point memory 105. As these data become available, they are loaded into microprocessor 103 (X-data port 150 is specified in source field 141), added to address x (internally on microprocessor 103 under the control of X-operation field 142), the sum is put back on system bus 134 and loaded into the index register in A-counter 118 (A-counter 118 is specified by destination field 143). The addresses for storing vector Z are consecutive. It has been shown in the previous applications, how to generate such addresses.

Tables 3.1 and 3.2 illustrate a program and the progress of registers, respectively, for execution of a gather operation. Assume value x is stored in internal register R(O) of microprocessor 103, X-address counter 104 is initialised to value i, the index in C-address counter 128 is initialised to value z, location b of F-memory 106 stores value 0 and the index of B-counter 123 is initialised to value b.

The instructions in table 3.1 will start the gather operation in this situation. Base fields 121, 126, 131 are not shown and are assumed to have value 0. Table 3.2 shows the progress of the computation while the pipe is being filled and during the first two instruction cycles when the pipe is full.

Scatter operations are performed in a similar manner. In the case of scatter operations consecutive A-addresses are generated and addresses x + I(0), x + I(1),... are loaded at an appropriate time into the C-counter.

4. Creating Index Vectors:

In this application, it is shown how to efficiently generate index vectors like the vector I used in the previous application.

Assume vector X = (X(0),...,X(N-1)) is stored in F-memory 106 starting at location x. Let X(I(0)),...,X(I(n-1)) be those elements of vector X which are smaller than a given value D. Assume said value D is stored at location d in F-memory 106 and index vector I = (I(0),...,I(n-1)) is to be computed and stored in fixed point memory 105, starting at location i.

Suppose value i-1 is initially stored in X-address counter 104. Suppose value 1 is stored in internal register R(0) of microprocessor 103, and suppose initially value -1 is stored in the accumulator of microprocessor 103.

The index vector I is computed in the following way. A-counter 118 generates addresses x, x + 1,... under the control of bit a of counter field 144. B-counter 123 holds address d. Fields base(A) 121 and base-(B) 126 are 0. F-operation field 147 specifies B-operand 110 (i.e. value D) to be subtracted from A-operand 108 (i.e. an element X(i) of vector X). Test bit FT 148 is on. The field base(C) 131 specifies a condition code mask such that F-condition code 116 is turned on, if the result produced by F-ALU 113 is smaller than 0. C-Counter 128 has value 0 (otherwise the leading bits of C-counter could interfere with the condition code mask via circuit 130).

As a function of the F-condition code 116 one of two instructions is fetched, say instruction a is fetched, if the condition code is 0 and instruction b is fetched otherwise. In both instructions the content of register R(0) is added to the accumulator in microprocessor 103. This makes the value of the accumulator equal to that index j, such that testing "X(j) < D ?" produced the condition code 116 which caused said instruction to be fetched. In instruction a, nothing else is done. In instruction b, the new value of the accumulator is put on system bus 134 and loaded into X-data port 150 of fixed point memory 105 under the control of destination field 143. Also in instruction b, X-address counter 104 is increased under the control of bit x of counter field 144. If index j was the k'th index such that testing "X(j) < D ?" resulted in fetching instruction b, then X-address counter 104 will be increased to value i + k-1, and value j = I(k-1) will be stored at location i + k-1 of fixed point memory 105.

Tables 4.1 and 4.2 illustrate a program and the progress of registers, respectively, for generating the index vector I and storing it in the fixed point memory 105 as discussed above. Assume X(1) and X(2) are smaller than D, and X(0), X(3) and X(4) are greater than D. In table 4.1 there is shown a sequence of instructions which start the generation of index vector I as described above. Table 4.2 shows the progress of the computation during pipe fill and during the first 2 instruction cycles while the pipe is full.

Implementation of F-Memory 106

FIG. 5 shows one way to implement 3-port RAMs like F-memory 106. Every location is duplicated in two banks, once in an A-bank 513 and once in a B-bank 514. In order to fetch an A-operand, A-address 107 is routed through A-address MUX 511 to A-bank 513. From there the A-operand is fetched from the location specified by A-address 107 and loaded into A-operand port 108.

In order to fetch a B-operand, B-address 109 is routed through B-address MUX 512 to B-bank 514. From there the B-operand is fetched from the location specified by B-address 109 and loaded into B-operand port 110.

In order to store a C-result, C-address 112 is routed through A-address MUX 511 to A-bank 513, and C-address 112 is routed through B-address MUX 512 to B-bank 514. Data from C-result port 111 is routed via driver 515 to data port 517 of A-bank 513 from where the data are stored at the location specified by C-address 112. Data from C-result port 111 is also routed via driver 516 to data port 518 of B-bank 514 from where the data are stored at the location specified by C-address 112.

A three address operation consisting of two reads and one write during one instruction cycle is performed by performing the reads during the first half of the instruction cycle and the writes during the second half of the instruction cycle.

Components for Implementing the Embodiment of the Invention

In Table 5 there are listed widely available parts for implementing all the modules of the floating point processor shown in FIG. 1 except the multiport memory 106. In Table 6 there are shown parts for implementing the modules of the 3-port RAM shown in FIG. 5.

7

EP 0 227 900 B1

## Table 1.1

(X = don't care)

(* = multiply)

| Instruction | | X-operation | Destination | XT | a b c | Base(A) | Base(B) | Base(C) | FT | F-op |
|---|---|---|---|---|---|---|---|---|---|---|
| | 0 | bus: = R(0) | A,B,C-counters | 0 | 0 0 0 | X | X | X | 1 | X |
| pipe | 1 | | | | 1 1 0 | p | q | X | 1 | * |
| fill | 2 | | | | 1 1 0 | p | q | X | 1 | * |
| | 3 | | | | 1 1 0 | p | q | X | 1 | * |
| pipe | 4 | | | | 1 1 0 | p | q | s | 0 | * |
| full | 5 | | | | 1 1 1 | p | q | s | 0 | * |
| | 6 | | | | 0 0 1 | p | q | s | 0 | * |
| pipe | 7 | | | | 0 0 1 | X | X | s | 0 | X |
| drain | 8 | | | | 0 0 1 | X | X | s | 0 | X |
| | 9 | | | | 0 0 0 | X | X | s | 0 | X |

<u>Table 1.2</u>

Instruction

| Cycle | 0 | 1 | 2 | 3 | 4 | 5 | 6 | 7 | 8 | 9 |
|---|---|---|---|---|---|---|---|---|---|---|
| A-counter | 0 | 1 | 2 | 3 | 4 | 5 | | | | |
| B-counter | 0 | 1 | 2 | 3 | 4 | 5 | | | | |
| C-counter | 0 | 0 | 0 | 0 | 1 | 2 | 3 | 4 | 5 | |
| | | | | | | | | | | |
| A-address | | P+0 | P+1 | P+2 | P+3 | P+4 | P+5 | | | |
| B-address | | Q+0 | Q+1 | Q+2 | Q+3 | Q+4 | Q+5 | | | |
| F-op register | | * | * | * | * | * | * | | | |
| C-address | | | | | S+0 | S+1 | S+2 | S+3 | S+4 | S+5 |
| | | | | | | | | | | |
| A-operand | | X(0) | X(1) | X(2) | X(3) | X(4) | X(5) | | | |
| B-operand | | Y(0) | Y(1) | Y(2) | Y(3) | Y(4) | X(5) | | | |
| | | | | | | | | | | |
| C-result | | | | | Z(0) | Z(1) | Z(2) | Z(3) | Z(4) | Z(5) |

## Table 2.1

| Instruction | Source | X-operation | Destination | XT | a b c | FT | F-op |
|---|---|---|---|---|---|---|---|
| pipe fill 1, 2, 3 | A-counter | bus: = bus + R(0) | A-counter | 0 | 0 0 0 | 1 | + |
| pipe full 4, 5 | " | " | " | 0 | 0 0 1 | 0 | + |

## Table 2.2

| Instruction cycle | 0 | 1 | 2 | 3 | 4 | 5 |
|---|---|---|---|---|---|---|
| A-counter | a | a+m | a+2m | a+3m | a+4m | a+5m |
| B-counter | b | b | b | b | b | b |
| C-counter | c | c | c | c | c+1 | c+2 |
| A-address | | a | a+m | a+2m | a+3m | a+4m |
| B-address | | b | b | b | b | b |
| C-address | | c | c | c | c | c+1 |
| F-op-register | | + | + | + | + | + |
| A-operand | | | A(0,0) | A(1,0) | A(2,0) | A(3,0) |
| B-operand | 0 | 0 | 0 | 0 | 0 | 0 |
| C-result | | | | | A(0,0) | A(1,0) |

pipe fill                          / pipe full

## Table 3.1

| | Instruction | Source | X-op | Destination | XT | x a b c | FT | F-op |
|---|---|---|---|---|---|---|---|---|
| pipe fill | 1 | X | X | X | 1 | 1 0 0 0 | 1 | X |
| | 2 | X-data | bus: = bus + R(0) | A-counter | 0 | 1 0 0 0 | 1 | X |
| ___ | 3, 4, 5 | " | " | " | 0 | 1 0 0 0 | 1 | + |
| pipe full | 6, 7 | " | " | " | 0 | 1 0 0 1 | 0 | + |

## Table 3.2

| Instruction cycle | 0 | 1 | 2 | 3 | 4 | 5 | 6 | 7 |
|---|---|---|---|---|---|---|---|---|
| X-counter | i | i+1 | i+2 | i+3 | i+4 | i+5 | i+6 | i+7 |
| X-data | | I(0) | I(1) | I(2) | I(3) | I(4) | I(5) | I(6) |
| A-counter | | | x+I(0) | x+I(1) | x+I(2) | x+I(3) | x+I(4) | x+I(5) |
| B-counter | b | b | b | b | b | b | b | b |
| C-counter | z | z | z | z | z | z | z+1 | z+2 |
| A-address | | | | x+I(0) | x+I(1) | x+I(2) | x+I(3) | x+I(4) |
| B-address | b | b | b | b | b | b | b | b |
| F-op register | | | | + | + | + | + | + |
| C-address | | z | z | z | z | z | z | z+1 |
| A-operand | | | | | X(I(0)) | X(I(1)) | X(I(2)) | X(I(3)) |
| B-operand | | | | 0 | 0 | 0 | 0 | 0 |
| C-data | | | | | | | X(I(0)) | X(I(1)) |
| | | | | pipe fill | | | / pipe full | |

EP 0 227 900 B1

EP 0 227 900 B1

Table 4.1

| Instruction | S-instruction | X-operation | Destination | XT | x | a | base(c) | FT | F-op |
|---|---|---|---|---|---|---|---|---|---|
| 1, 2, 3 | continue | X | X | 1 | 0 | 1 | X | 1 | - |
| 4 | " | X | X | 1 | 0 | 1 | < | 1 | - |
| 5 | if FCC=0 fetch a else b | X | X | 1 | 0 | 1 | < | 1 | - |
| a | if FCC=0 fetch a else b | acc:=acc+R(0) | X | 1 | 0 | 1 | < | 1 | - |
| b | if FCC=0 fetch a else b | acc:=acc+R(0) bus:=acc | X-data port | 0 | 1 | 1 | < | 1 | - |

EP 0 227 900 B1

Table 4.2

| Instruction | 0 | 1 | 2 | 3 | 4 | 5 | 6 | 7 | 8 |
|---|---|---|---|---|---|---|---|---|---|
| A-counter | x | x+1 | x+2 | x+3 | x+4 | x+5 | x+6 | x+7 | x+8 |
| B-counter | d | d | d | d | d | d | d | d | d |
| A-address | | x | x+1 | x+2 | x+3 | x+4 | x+5 | x+6 | x+7 |
| B-address | | d | d | d | d | d | d | d | d |
| F-op-register | | - | - | - | - | - | - | - | - |
| C-address (mask) | | | | | < | < | < | < | < |
| A-operand | | | X(0) | X(1) | X(2) | X(3) | X(4) | X(5) | X(6) |
| B-operand | | | D | D | D | D | D | D | D |
| F-CC | | | | | 0 | 1 | 1 | 0 | 0 |
| instruction fetched | | | | | | a | b | b | a |
| accumulator | -1 | | | | | | 0 | 1 | 2 |
| X-data | | | | | | | | 1 | 2 |
| X-address counter | i-1 | | | | | | | i | i+1 |

pipe fill                    / pipe full

```
         Sequencing module 100        Am 2910A

         Instruction memory 101       IMS 1421

         Instruction register 102     F374

         Microprocessor 103           Am29117

         X-address counter 104        F163

         Fixed point memory 105       IMS 1421

         X-data port 150              Am29118

         Counters 118, 123, 128       F163

         Circuits 120, 125, 130       F32

         F-operation register 149     F374

         F-ALU 113                    Am29325

         Condition code MUX 114       F157
```

<u>Table 6</u>

```
         Address ports 107, 109, 112  F374

         Multiplexers 511, 512        F157

         Banks 513, 514               IMS1421

         Ports 108, 110, 111          F374

         Drivers 515, 516             F244
```

<u>Conclusion</u>

Disclosed is a very powerful architecture for a floating point processor adapted to perform efficiently three address code operations. The embodiment and applications described were chosen for the purposes of illustration and description. Those skilled in the art will recognise that many variations of the three address code embodiment can be made without departing from the scope of the appended claims.

**Claims**

**1.** Data processing apparatus responsive to a native set of instructions, including at least one three-address instruction, the apparatus being arranged to execute successively presented instructions in successive cycles and including a memory (106) which has at least a first, a second and a third r-bit address register (107, 109, 112), each with an associated data register (108, 110, 111), and address generating means (107, 109, 112) characterised in that the address generating means has a first, a

14

second and a third index register (105, 118, 123, 128), each storing an alterable respective first, second or third index for supply as an address to the associated first, second or third address register, the apparatus further comprising counter means (118, 123, 128), responsive to at least a portion of an instruction word in a cycle for independently incrementing, within the cycle, the first, second and third indices in the index registers, and index change means (103, 104, 105, 150), responsive to at least a portion of an instruction word for independently changing, within a cycle, to an arbitrary value the index in at least one of the index registers.

2. Apparatus as claimed in claim 1, wherein the index change means is arranged to combine m high order bits of the respective index with m bits from the instruction word causing the index change, where m is an integer smaller than r.

3. Apparatus as claimed in Claim 1, wherein the index change means includes storage means (105), accessed under control of a portion of the index change instruction word, addressably storing a plurality of indices for supply as the arbitrary index.

4. Apparatus as claimed in claim 3, wherein addressing of the storage means is controlled by a dedicated processor (103).

5. Apparatus as claimed in claim 1 or claim 2, wherein the instruction set includes a sequencing instruction, a floating point instruction and a fixed point instruction, the apparatus including an instruction register, sequencing means (100) responsive to the sequencing instruction and controlling the supply of instruction words to the instruction register, floating point means (30) responsive to the floating point instruction and performing floating point operations, and an arithmetic logic unit (113), responsive to a portion of the floating point instruction and performing operations on data objects supplied at the memory output registers (108, 110) and supplying resulting data objects at the memory input register (111), the index change means being fixed point and including a fixed point memory (105) for storing index data having a fixed point data port, an address counter (104), responsive to a portion of the fixed point instruction, supplying addresses for reading and writing indices to the the fixed point memory, and a processor (103), responsive to a portion of the fixed point instruction, for generating indices and for controlling the fixed point memory and address counter, the fixed point means being responsive to an invoked fixed point instruction in a cycle, for performing fixed point operations to supply arbitrary index data within the cycle to the first, second and third index registers.

6. Apparatus as claimed in claim 5, wherein the fixed point processor includes means for generating a fixed point condition code, the arithmetic logic unit further includes means for generating a floating point condition code and the sequencing means includes a condition code multiplexer (114) for selecting one of the fixed point condition code or the floating point condition code and means responsive to the selected condition code for selecting branch instruction words.

**Patentansprüche**

1. Eine Datenverarbeitungseinrichtung, die auf einen natürlichen Befehlssatz mit zumindest einem Dreiadressen-Befehl anspricht, wobei die Einrichtung dazu eingerichtet ist, aufeinanderfolgend zugeführte Befehle in aufeinanderfolgenden Zyklen auszuführen und einen Speicher (106) enthält, der aufweist: zumindest ein erstes, ein zweiten und ein drittes r-Bit Register (107, 109, 112), wobei jedem ein Datenregister (108, 110, 111) zugeordnet ist, und adreßerzeugende Mittel (107, 109, 112), **dadurch gekennzeichnet, daß** die adreßerzeugenden Mittel ein erstes, ein zweites und ein drittes Indexregister (105, 118, 123, 128) aufweisen, wobei jedes einen entsprechenden änderbaren ersten, zweiten oder dritten Index speichert, um an das zugeordnete erste, zweite oder dritte Adreßregister als Adresse geliefert zu werden, und die Einrichtung weiters Zählermittel (118, 123, 128), die in einem Zyklus zumindest auf einen Teil eines Befehlswortes ansprechen, um innerhalb des Zyklus den ersten, zweiten und dritten Index der Indexregister unabhängig zu erhöhen, und ein Mittel (103, 104, 105, 150) zum Verändern des Index aufweist, das zumindest auf einen Teil eines Befehlswortes anspricht, um innerhalb eines Zyklus den Index in zumindest einem der Indexregister unabhängig auf einen willkürlichen Wert zu verändern.

**2.** Einrichtung nach Anspruch 1, bei welcher das Mittel zum Ändern des Index dazu eingerichtet ist, m Bits mit hoher Ordnung des entsprechenden Index mit m Bits des Befehlswortes, welche die Veränderung des Index bewirken, zu vereinen, wobei m eine ganze Zahl kleiner r ist.

**3.** Einrichtung nach Anspruch 1, bei welcher das Mittel zum Verändern des Index Speichermittel (105) enthält, auf die unter Steuerung durch einen Teil des Befehlswortes für die Indexveränderung zugegriffen wird und die eine Mehrzahl von Indizes zur Lieferung als willkürliche Indizes adressierbar speichern.

**4.** Verfahren nach Anspruch 3, bei welchem das Adressieren der Speichermittel durch einen dafür vorgesehenen Prozessor (103) gesteuert wird.

**5.** Einrichtung nach Anspruch 1 oder 2, bei welcher der Befehlssatz einen Sequenzbefehl, einen Fließkommabefehl und einen Festkommabefehl enthält, wobei die Einrichtung ein Befehlsregister, Sequenzmittel (100), die auf den Sequenzbefehl ansprechen und die Lieferung von Befehlswörtern an das Befehlsregister steuern, Fließkommamittel (30), die auf den Fließkommabefehl ansprechen und Fließkommaoperationen ausführen, und eine arithmetische Logikeinheit (113) enthält, die auf einen Teil des Fließkommabefehls anspricht und an Datenobjekten, die an das Speicherausgaberegister (108, 110) geliefert werden, Arbeitsschritte ausführt und dem Speichereingaberegister (111) daraus resultierende Datenobjekte liefert, wobei das Mittel zum Verändern des Index im Festkommabetrieb arbeitet und einen Festkommaspeicher (105) zum Speichern von Indexdaten enthält, der einen Festkomma-Datenanschluß, einen Adreßzähler (104), der auf einen Teil des Festkommabefehls anspricht, um Adressen zum Lesen und Schreiben von Indizes an den Festkommaspeicher zu liefern, und einen Prozessor (103) enthält, der auf einen Teil des Festkommabefehls anspricht, um Indizes herzustellen und den Festkommaspeicher und Adreßzähler zu steuern, wobei die Festkommamittel in einem Zyklus zum Liefern von Festkommaoperationen in einem Zyklus auf einen dafür herangezogenen Festkommabefehl ansprechen, um innerhalb des Zyklus willkürliche Indexdaten an das erste, zweite und dritte Indexregister zu liefern.

**6.** Einrichtung nach Anspruch 5, bei welcher der Festkommaprozessor Mittel zum Erzeugen eines Festkomma-Zustandscodes, die arithmetische Logikeinheit weiters Mittel zum Erzeugen eines Fließkomma-Zustandscodes enthalten und die Sequenzmittel einen Zustandscode-Multiplexer (114) zum Auswählen des Festkomma-Zustandscodes oder des Fließkomma-Zustandscodes und Mittel enthalten, die auf den gewählten Zustandscode ansprechen, um Verzweigungs-Befehlswörter auszuwählen.

## Revendications

**1.** Appareil de traitement de données répondant à un jeu propre d'instructions, comportant au moins une instruction à trois adresses, l'appareil étant prévu pour exécuter successivement les instructions présentées pendant des cycles successifs et comportant une mémoire (106) qui comprend au moins un premier, un second et un troisième registres d'adresse à r bits (107, 109, 112), chacun avec un registre de données associé (108, 110, 111) et un moyen de génération d'adresses (107, 104, 112), caractérisé en ce que le moyen de génération d'adresses comporte un premier, un second et un troisième registres d'index (105, 118, 123, 128), chacun mémorisant un premier, second et troisième index modifiables pour application en tant qu'adresse aux premier, second ou troisième registre d'adresse associé, l'appareil comprenant de plus un moyen de compteur (118, 123, 128) répondant à au moins une partie d'un mot d'instruction pendant un cycle pour incrémenter de manière indépendante, pendant le cycle, les premier, second et troisième index dans les registres d'index et un moyen de modification d'index (103, 104, 105, 150), répondant à au moins une partie d'un mot d'instruction, pour modifier indépendamment pendant un cycle à une valeur arbitraire l'index dans au moins un des registres d'index.

**2.** Appareil selon la revendication 1, dans lequel le moyen de modification d'index est prévu pour combiner m bits de poids fort de l'index respectif avec m bits du mot d'instruction amenant la modification de l'index, où m est un nombre entier inférieur à r.

**3.** Appareil selon la revendication 1, dans lequel le moyen de modification d'index comporte un moyen de mémoire (105), auquel on peut accéder sous la commande d'une partie du mot d'instruction de

16

modification d'index, mémorisant de manière adressable une pluralité d'index pour application en tant qu'index arbitraires.

4. Appareil selon la revendication 3, dans lequel l'adressage du moyen de mémoire est commandé par un processeur spécialisé (103).

5. Appareil selon la revendication 1 ou la revendication 2, dans lequel le jeu d'instructions comporte une instruction de séquencement, une instruction en virgule flottante et une instruction en virgule fixe, l'appareil comportant un registre d'instructions, un moyen de séquencement (100) répondant à l'instruction de séquencement et commandant l'application des mots d'instruction au registre d'instructions, un moyen de virgule flottante (30) répondant à l'instruction en virgule flottante et exécutant les opérations en virgule flottante et une unité arithmétique et logique (113) répondant à une partie de l'instruction en virgule flottante et exécutant les opérations sur les données délivrés aux registres de sortie de la mémoire (108, 110) et délivrant les données obtenues aux registres d'entrée de la mémoire (111), le moyen de modification d'index étant de virgule fixe et comportant une mémoire de virgule fixe (105) pour mémoriser les données d'index ayant un accès de données en virgule fixe, un compteur d'adresses (104), répondant à une partie de l'instruction en virgule fixe, délivrant les adresses pour lire et écrire des index dans la mémoire de virgule fixe et un processeur (103) répondant à une partie de l'instruction en virgule fixe pour produire des index et pour commander la mémoire de virgule fixe et le compteur d'adresses, le moyen de virgule fixe étant sensible à une instruction en virgule fixe appelée dans un cycle, pour exécuter les opérations en virgule fixe pour appliquer des données d'index arbitraire pendant le cycle aux premier, second et troisième registres d'index.

6. Appareil selon la revendication 5, dans lequel le processeur en virgule fixe comporte un moyen pour produire un code de condition de virgule fixe, l'unité arithmétique et logique comporte de plus un moyen pour produire un code de condition de virgule flottante et le moyen de séquencement comporte un multiplexeur de code de conditions (114) pour sélectionner un code parmi les codes de condition de virgule fixe et de virgule flottante et un moyen répondant au code de condition sélectionné pour sélectionner les mots d'instruction de branchement.

FIG. 1A

| FIG. 1A | FIG. 1B | FIG. 1C |
|---------|---------|---------|

KEY TO FIG. 1

FIG. 1B

FIG. 1C

**FIG. 2A**

**FIG. 2B**

b     A(0,0)

.
.

A(0,m-1)

b+m     A(1,0)

.
.

A(1,m-1)

.
.
.
.

ɔ+(n-1)m     A(n-1,0)

.
.

A(n-1,m-1)

C     A(0,0)

A(1,0)

.
.

C+n-1     A(n-1,0)

F-MEMORY

FIG. 3

22

GATHER OPERATION

**FIG. 4A**

SCATTER OPERATION

**FIG. 4B**

FIG. 5